# EUROPEAN PATENT SPECIFICATION

(11) **EP 0 853 290 B1**
(45) Date of publication and mention of the grant of the patent: **27.11.2002**
(21) Application number: 98200515.9
(22) Date of filing: 11.03.1991
(51) Int. Cl.: G06K 7/10, G06F 17/60, G07G 1/00, G06K 17/00

(54) **Method of processing products in a point-of-sale system.**
Verfahren zum Verarbeiten von Produkten bei einem Kassenterminalsystem
Procédé de traitement des produits dans un système de point de vente

(30) Priority: 16.07.1990 US 553558
(43) Date of publication of application: 15.07.1998
(62) Divisional of application: 91103705.9
(73) Proprietor: SYMBOL TECHNOLOGIES, INC., Holtsville, New York 11742-1300 (US)
(72) Inventor: Swartz, Jerome, Old Field, New York 11733 (US)
(74) Representative: Maggs, Michael Norman

(56) References cited:
- EP-A- 0 199 252
- US-A- 4 377 741
- US-A- 4 766 297
- US-A- 4 879 650

## Description

This invention generally relates to a method of processing products in a point-of-sale (POS) system. In general, this system includes a scanner for electro-optically scanning a target, e.g. a bar code symbol on a label applied to a product; a terminal such as a data base computer or cash register operative for storing information, e.g. price or price per unit weight, relating to the product, and for periodically updating such information and a printer for printing an updated label for such updated information.

### 2. Description of Related Art

Targets having indicia of different light reflectivity, such as bar code symbols printed on labels affixed to products, have been electro-optically scanned by directing laser beams to symbols for reflection therefrom. A portion of the reflected laser beam for each symbol was collected by a photodetector having a finite field of view. Each symbol and/or the field of view was scanned by different scan patterns including, but not limited to, a single scan line, a set of generally parallel scan lines, two sets of intersecting parallel scan lines, multiple intersecting scan lines, Lissajous scan patterns, holographic scan patterns, omnidirectional scan patterns, etc.

POS scanners and readers of this general type for electro-optically reading symbols have been disclosed, for example, in U.S. Pat. Nos. 4,251,798; 4,360,798; 4,369,361; 4,387,297; 4,593,186; 4,496,831; 4,409,470; 4,460,120; 4,607,156; 4,673,805; 4,736,095; 4,758,717; 4,760,248; 4,806,742; 4,808,804; 4,825,057; 4,816,661; 4,816,660; 4,845,350; 4,835,374; 4,871,904; D-306,434; D-306,435; as well as pending applications Serial Nos. 193,265; 265,143; 265.,548; 265,149; 264,693; 367,335; 367,007; 429,198; 392,207; and 349,860, all of the aforementioned patents and patent applications having been assigned to the same assignee as the instant application.

US-A-4 879 650 discloses a point-of-sale terminal which comprises a bar code scanner and a weighing scale.

EP-A-0 199 252 discloses a portable hand-held thermal label printer which has a bar code scanner wand. The label printer is used to label parcels coming from a dispatcher. The parcels arrive with a dispatcher bar code B. A host computer or microcomputer stores information about the parcels. This information is also stored in the memory of the label printer. The label printer reads the bar code B via means of the wand. The read data is matched with the information in the memory and a label L is printed and attached to the parcel.

US-A-4 377 741 discloses an apparatus for updating information (e.g. the price) on a label attached to an item. The apparatus comprises a hand-held device having an OCR scanner, a printer, two displays and a portable control unit which stores data about the items to be updated. In operation, the scanner in the hand-held device scans the stock number and price etc. on the item and sends data to the control unit. If the stock number is in the database of the control unit, the updated pricing information is transmitted to one of the displays simultaneously with the present pricing information which is shown on the other display. If the updated pricing information differs from the present pricing information, the updated pricing information is printed via the printer on a label which is attached to the item.

Once a product having a symbol-bearing label has been scanned and identified, information such as price relating to the identified product is retrieved from a data base of a host computer. This information is then used, for example, at a supermarket checkout counter to indicate the price of the identified product to a customer.

Although generally satisfactory for its intended purpose, some customers wish to know the price of a product before standing in line at the checkout counter. To assist the customer, some stores post price signs in the vicinity of the products for sale on supermarket shelves. However, those signs are sometimes removed and not replaced on the shelves.. More often, the price information is outdated from one day to the next due to price increases or special promotion sales. The only reliable price information is obtained typically only at the checkout counter and, as previously noted, many customers would like to know the price beforehand.

### SUMMARY OF THE INVENTION

### 1. Objects of the Invention

An object of this invention is to advise a customer of the price of a product prior to checkout.

### 2. Features of the Invention

In keeping with these objects, and others which will become apparent hereinafter, one feature of this invention resides in a method of processing products in a point-of-sale system as defined in claim 1. Some preferred features are specified in the dependent claims.

Each of the products is identified by electro-optically reading indicia thereon having parts of different light reflectivity. In a preferred embodiment, the indicia are bar code symbols printed on labels affixed to the products.

Each time a product has been identified, the host computer is interrogated on a real-time basis for updated price information. If updated price information is available, an updated label is printed, the updated label containing the updated price information in human-readable and optionally machine-readable form. The updated label is thereupon applied to the identified product. Thus, the'customer is reliably apprised of the actual price of the item prior to checkout. No longer need the customer be faced with missing price signs. In the case where the price information includes price per unit weight data, this invention further contemplates weighing the identified product prior to interrogating the host computer. Thus, the updated label is printed with the weight and price information for application to the identified product prior to checkout.

The electro-optical reading of the symbol is preferably performed by a hand-held head supported by a retail clerk, and aimable at each symbol during reading. Within the head are mounted means for directing a light beam, preferably a laser beam, to the symbol, means for detecting at least a portion of light of variable intensity reflected off each symbol over a field of view, means for scanning at least one of said laser beam and said field of view, and means for processing electrical signals indicative of the detected light intensity into data identifying the product bearing the symbol.

Rather than a hand-held head, all of the aforementioned means can be incorporated in a head of a desktop, stand-alone workstation. The head may be connected, in a preferred embodiment, to one end of an arm that is bendable in order to position the head in a desired orientation.

The printing of the updated label may be performed by a printer on-board the head, or located remotely therefrom, e.g. a portable printer either held separately by the clerk or supported on a belt or shoulder strap worn by the clerk.

In a preferred embodiment, the printer is a thermal printer that is powered by a re-usable, rechargeable battery. The printer advantageously prints on leading portions of a paper roll of tear-off labels not only the aforementioned price information, but also sequence numbers indicative of the number of times that the printer has printed labels -- a feature useful in preventing pilferage.

The electro-optical reading of a bar code symbol uniquely associated with each product insures that incorrect product identification by manual entry of an incorrect numerical code at a keyboard is reliably prevented.

### BRIEF DESCRIPTION OF THE DRAWINGS

FIG. 1 is a sectional view of a hand-held head together with a host computer;
FIG. 2 is a perspective view of the arrangement of FIG. 1 in use;
FIG. 3 is a diagrammatic side view of another arrangement for processing products;
FIG. 4 is a diagrammatic side view of yet another arrangement for processing products;
FIG. 5 is a diagrammatic side view of an additional arrangement for processing products;
FIG. 6 is a diagrammatic side view of a further arrangement for processing products; and
Fig. 7 has been deleted;
FIG. 8 is a black diagram showing a host computer serving multiple scanning workstations.

### DETAILED DESCRIPTION OF THE PREFERRED EMBODIMENTS

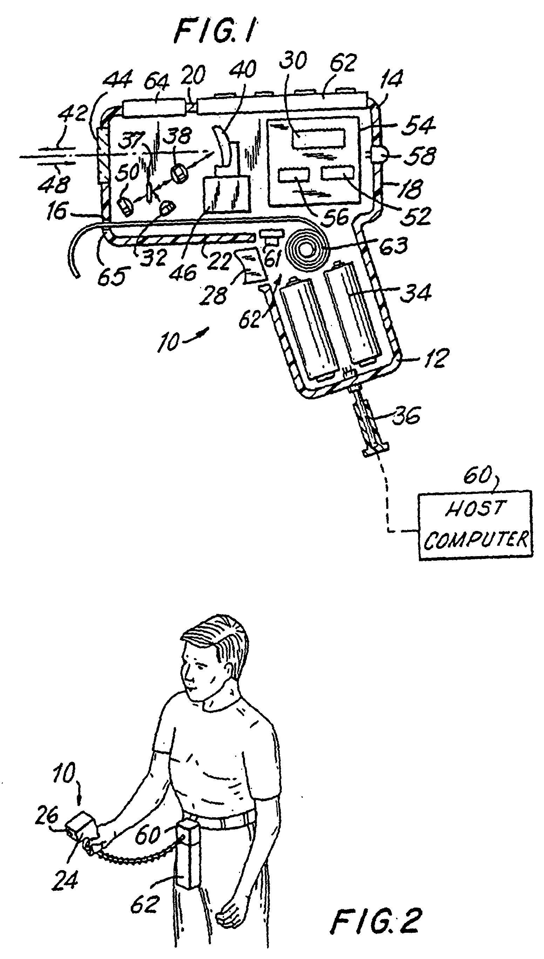

Referring now to FIG. 1 of the drawings, reference numeral 10 generally identifies a lightweight (less than 1 lb.) (2.2 lb. ≃ 1kg), narrow-bodied, streamlined, hand-held, fully-portable, easy-to-manipulate, non-arm-and wrist-fatiguing, scanning head supportable entirely by an operator for use in a scanning system operative for reading, scanning and/or analyzing symbols, and aimable, both prior to and during reading thereof, by the operator at the symbol, each symbol in its turn. The term "symbol" as used herein is intended to cover indicia composed of parts having different light-reflective properties. The indicia may be industrial symbols, e.g. Code 30, Codabar, Interleaved 2 or 5, etc., or the omnipresent Universal Product Code (UPC) bar code symbol. The indicia may also be composed of alphabetic and/or numeric characters.

The head 10 includes a generally gun-shaped housing having a handle portion 12 of generally rectangular cross-section, and a generally horizontally-elongated, narrow-bodied barrel or body-portion 14. The dimensions and overall size of the handle portion 12 are such that the head 10 can conveniently fit and be held in the operator's hand. The body and handle portions are constituted of a lightweight, resilient, shock-resistant, self-supporting material such as a synthetic plastic material. The plastic housing is preferably injection-molded and forms a thin, hollow shell whose interior space measures less than a volume on the order of 820 cm³ (50 cu.in.)

As considered in an intended position of use, as shown in FIG. 2, the body portion 14 has a front wall 16, a rear wall 18 spaced rearwardly of the front wall, a top wall 20, a bottom wall 22 below the top wall, and a pair of opposed side walls 24, 26 that lie in mutual parallelism between the top and bottom walls.

A manually-actuatable, and preferably depressible, trigger 28 is mounted for pivoting movement about a pivot axis on the head in a forwardly-facing region where the handle and body portions meet and where the operator's forefinger normally lies when the operator grips the handle portion in the intended position of use.

A plurality of components are mounted in the head and, as explained below, at least some of them.are actuated by the trigger 28, either directly or indirectly, by means of a control microprocessor 30. One of the head components is an actuatable light source, e.g. a semiconductor laser diode 32 or a light emitting diode, operative, when actuated by the trigger 28, for propagating and generating an incident light beam. In the case of a laser, the light beam is highly divergent, is non-radially symmetrical, is generally oval in cross-section, and has a wavelength above 7000 Angstrom units. The laser diode 32 may be of the continuous wave or pulse type. The diode 32 requires a low voltage, e.g. 12 volts DC or less, supplied by a battery 34 which may be provided within the handle portion 12 or by a rechargeable battery pack accessory detachably mounted on the head, or by a power conductor in a cable connected to the head from an external power supply.

An optical assembly, including a half-silvered mirror 37 and an optical train 38, is mounted in the head, and is adjustably positioned relative to the diode 32 for optically modifying and directing the incident laser beam along a first optical path toward a reference plane which is located exteriorly of the head forwardly of the front wall 16 and which lies generally perpendicular to the longitudional direction along which the incident. laser beam propagates. A symbol to be read is located at the vicinity of the reference plane, either at,or at one side, or at an opposite side,of the reference plane, that is, anywhere within the depth of focus or field of the optically-modified incident laser beam. The depth of focus or field is also known as the working distance in which the symbols can be read. The incident laser beam reflects off each symbol in many directions, and that portion of the reflected laser light which travels away from the symbol back toward the head is known herein as the returning portion.

The laser beam passing through the optical train 38 impinges on a generally planar portion of a scanning mirror 40 for reflection therefrom. The scanning mirror 40 forwardly reflects the laser beam impinging thereon in the direction of an arrow 42 through a forwardly-facing light-transmissive window 44 mounted on the front wall 16 and to the symbol.

The scanning mirror 40 is mounted on a scanning component, preferably a high-speed scanner motor. 46 of the type shown and described in U.S. Pat. No.4,387,397. For purposes of this application, it is sufficient to point out that the motor 46 has an output shaft on which a support bracket is fixedly mounted.
The scanning mirror 40 is fixedly mounted on the bracket and is driven in alternate circumferential directions over arc lengths of any desired size, typically less than 360°, and at a rate of speed on the order of a plurality of oscillations per second. In a preferred embodiment, the scanning mirror 40 and the shaft are reciprocally and repetitively oscillated so that the scanning mirror repetitively sweeps the incident laser beam impinging on the mirror through an angular distance or arc length at the reference plane of about 32° and at a rate of about 20 scans or 40 oscillations per second.

The returning portion of the reflected laser light has a variable light intensity due to the different light-reflective properties of the various parts that comprise the symbol over the symbol during the scan. The returning portion of the reflected laser light is collected in the direction of arrow 48 by a generally concave spherical portion of the mirror 40. The generally planar mirror portion is integrally attached to the generally spherical mirror portion of the mirror 40. The spherical portion reflects the collected light through the optical train 38, the half-silvered mirror 37, and to a sensor means, e.g. a photosensor 50.
The photosensor 50, preferably a photodiode, detects the variable intensity of the collected laser light over a field of view which extends along, and preferably beyond, the scan, and generates an electrical analog signal indicative of the detected variable light intensity.

Also mounted in the head is signal processing means 52 mounted on a circuit board 54, and operative for processing the analog electrical signal generated by the photodiode 50 into a digitized video signal. Data descriptive of the symbol can be derived from the video signal. Suitable signal processing circuitry for this purpose was described in U.S. Pat. No. 4,251,798. Other components within the head include drive circuitry for the motor 46, an aiming light controller in the event that the laser diode 32 generates a laser beam which is not readily visible to the human eye, and a voltage converter for converting incoming voltage, e.g. from the battery 34, to a regulated voltage suitable for energizing the laser diode 32.

Also mounted on the circuit board 54 is a decode/control means 56 operative for decoding the digitized video signal to a digitized decoded signal from which the desired data descriptive of the symbol is obtained in accordance with an algorithm contained in a software control program in the microprocessor 30. The decode/control means includes a PROM for holding the control program, and an RAM for temporary data storage. The decode/control means 56, together with the microprocessor, determine when a successful decoding of the symbol has been obtained, and also terminates the reading of the symbol upon the determination of the successful decoding thereof. The initiation of the reading is caused by depression of the trigger 28. The decode/control means also includes control circuitry for controlling the actuation of the actuatable components in the head, namely, the laser diode 32, the photodiode 50, the motor 46, and all the other electronic subcircuits therein, as initiated by the trigger, as well as for communicating with the user that the reading has been automatically terminated as, for example, by sending a control signal to an indicator lamp 58 to illuminate the same or by energizing a buzzer or beeper.

The decoded signal is either conducted along a conductor within a cable interconnected between the head and a remote host computer 60, or is transmitted by radio wave from the head to the computer 60 by means of antenna 36. The computer 60 serves essentially as a large data base, may be an in-store processor, stores the decoded signal, and provides information related to the decoded signal. For example, the host computer, can provide retail price information on an updated basis corresponding to the products identified by their decoded symbols. The host computer can advantageously be incorporated in a portable terminal, or in a stationary terminal such as a cash register.

A keyboard 62 may advantageously be provided on the head for entering data relating to the symbol and/or the product bearing the same. A display 64 is also conveniently mounted adjacent the keyboard 62 on the top wall 20 of the head, and is operative for displaying information relating to the symbol and/or the product bearing the same.

As described so far, each product bearing a label imprinted with a symbol is identified by scanning the symbol with the hand-held scanner head 10 in the manner depicted in FIG. 2. Information such as price is retrieved on a real-time basis from the data base of the host computer 60. The stored information is periodically updated, for example, by keyboard entry, to reflect price increases or decreases. The data base can be incorporated in a portable housing held in one's other hand, or supported on the operator's person, for example, suspended from a belt or shoulder strap, in a field-portable application.

In the event that the information stored in the data base has been updated, an updated label is printed with human-readable and optionally machine-readable data reflecting the updated information.

The printing is performed by a printer 62 that is either incorporated in the hand-held head 10 (see FIG. 1) or held in one's other hand, or worn on one's person (see FIG. 2), or mounted on a near-by support surface such as a countertop, or incorporated in another component such as a scale or cash register, as described below. The printer includes a thermal printhead 61 operative for thermally imprinting graphical markings on a journaled roll 63 of paper labels, each printed label being torn off the roll by being urged against tear-off edge 65 at *the* front of the head 10. The updated label preferably has a pressure-adhesive backing so that it can be applied directly on the product, either adjacent to, or preferably as an overlay to, the existing label on the product.

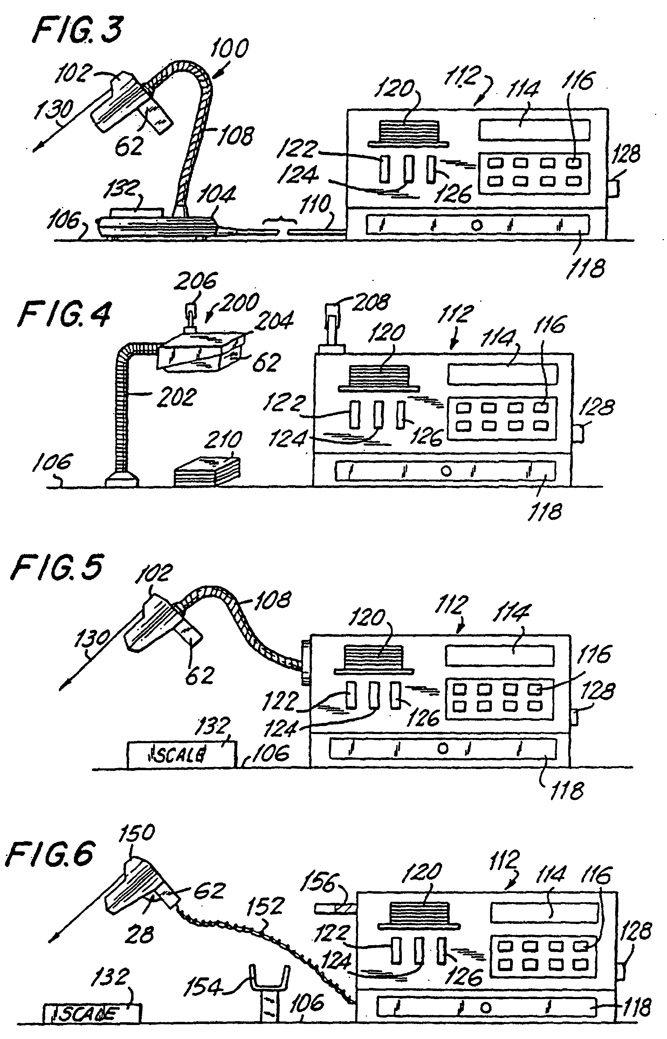

Turning now to FIG. 3, most or all of the components shown within the hand-held head 10 of FIG. 1 can be mounted within a workstation 100 having a head 102, a base 104 supported on a countertop or like support surface 106, and an adjustable gooseneck-like conduit or arm 108, one end of which is connected to the head 102, and the opposite end of which is connected to the base 104. The trigger 28 can be eliminated. The arm 108 is hollow so that electrical wires can be routed therethrough to conduct electrical. signals to and away from the components within the head 102. The arm is constituted of a semi-rigid, metal material capable of being repeatedly manually bent to a selected orientation and, when so bent, capable of staying in said selected orientation until re-bent by an operator to another orientation. By bending the arm, the head 102 is infinitely adjustably positioned relative to a symbol located in the vicinity of a work surface exteriorly of the scanner. The work surface or reference plane can be located at, or slightly above, the plane of the countertop 106, or can be located at, or slightly above, the plane of the upper surface of the base 104.

An electrical cable 110 connects the workstation to a terminal 112 which is shown, for convenience, as a cash register in a POS installation. The terminal 112 has a display 114 for displaying information, including data descriptive of the symbol being scanned, to an operator; a keyboard 116 for enabling the operator to manually enter information, including data descriptive of the symbol being scanned; a cash drawer 118 for holding money; a paper tape 120 for recording information and providing a receipt to a customer of the purchase of an object bearing the symbol being scanned; a recharger 122 for recharging and supplying electrical power to a battery mounted either within the base 104 or the head 102; a decode module 124 (in case the decode module is not located within the base 104, arm 108, or head 102); and a data base 126 of a host computer. A connector 128 can be used to download the stored data to another data base.

The entire installation shown in FIG. 3 is known as an intelligent terminal. The arm 108 can be manipulated with multiple degrees of freedom of movement to insure that the exiting laser beam (depicted by the arrow 130) strikes the symbol and/or the returning reflected light is collected from the symbol.

The laser scanning head 100 of FIG. 3 is of the retro-reflective type wherein the outgoing incident laser beam, as well as the field of view of the sensor means, are scanned. Variations of this can be used. For example, the outgoing incident laser beam can be directed to, and swept across, the symbol through one window on the head, while the field of view is not scanned and the returning laser light is collected through another window on the head. Also, the outgoing. incident beam can be directed to, but'not swept across, the symbol, while the field of view is scanned.

The printer 62 can be incorporated within the head. As shown in FIG. 3, the printer 62 is situated within a downward handle-like. extension of the head. Any components previously mounted within the handle can be moved, for example, to the base 104 or the terminal 112.

A weighing scale 132 is incorporated within the base 104, and is operative for weighing a product placed on a weighing platform. A product such as meat or fish,whose price is a function of weight, is placed on the platform and weighed. The head 102 identifies the product as being meat, fish, etc., by a symbol-bearing label. The data base 124 identifies the price per 1b. of the identified product. The price is calculated by the system microprocessor. The printer 62 prints the name of the product, the price, the price per 1b., etc in alpha-numeric and optionally machine-readable indicia, on an updated label which is then applied to the product over the original label. All of the above can be performed at a separate meat or fish counter in a supermarket, which counter is preferably remote from the checkout counter. The consumer thus knows the actual price of the product prior to reaching the checkout counter. At the checkout counter, the retail clerk need only scan the updated label with an electro-optical scanner, as described above, to complete the purchase of the product and expedite the checkout procedure.

Turning now to the so-called "zero footprint" embodiment of FIG. 4, most or all of the components within the hand-held head of FIG. 1 can be mounted within a lamp-like workstation 200 having a bendable arm 202 and a head 204 in which the printer 62 is mounted. The workstation is anchored to the support surface 106. The head can communicate with the terminal 112, for example, by radio wave communication, via antennæ 206, 208. The workstation 200 can scan bulky or small objects, such as delicatessen sandwich 210, and its slim, compact design clears valuable point-of-sale counter space, leaving more room for customers to put down their purchases and giving employees more room to work.

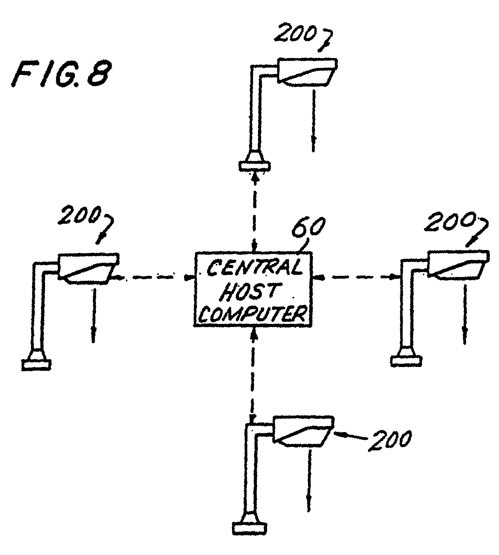

In the embodiment of FIG. 5, the bendable arm 108 and the head 102, including the printer 62, are neither anchored to the base 104 nor the support surface 106, but, instead, are directly connected to the cash register terminal 112. The scale 132 is mounted separately on the countertop 106.

As described in the embodiments of FIGs. 3-5, the bendable arm 108,202 enables the operator to specifically position the scanner head over the working surface so that the distance between the head and the products bearing the symbols to be scanned may be optimally adjusted. In practice, the operator will pass the articles bearing symbols to be scanned in a fairly rapid manner under the scanning head. The head will emit a laser beam scan pattern which covers the entire portion of the working surface so that the operator need not repetitively pass the article over a specific area such as an X-shaped slot formed in a countertop. Known slot-type scanners often require multiple passes of the article and symbol over a countertop slot in order to achieve an accurate registration of. the symbol with respect to the scan pattern. Since the scan pattern is, advantageously, a multi-directional pattern of the type described in U.S.S.N. 392,207, filed August 10, 1989, there is a much higher probability that one of the scan lines will extend across the symbol regardless of the orientation of the article on the working surface. Since the scanner workstation of FIGs. 3-5 is intended to operate in a hands-free mode, it is important that the scanning takes place continuously. When a bar code symbol is detected in the workstation, typically by interruption of an infrared beam, and correctly decoded, the data representative of the symbol is automatically entered into the POS terminal, and an indicator alerts the operator that a successful read has occurred. Although the scan lines will still continue to scan the bar code symbol on the article while the article is in the workstation, an inhibiting signal is generated after a successful read 'to prevent the same symbol from being read a multiple number of times.

Turning now to FIG. 6, a hand-held head 150 having an on-board printer 62, and actuatable, just like head 10, by a trigger 28, is connected via a cable 152 to the cash register terminal 112. The head 150 may be held in one's hand and/or mounted in a stand 154 resting on the tabletop 106, or may be mounted, at least temporarily, in a cradle 156 extending outwardly from the side of the terminal 112. The scale 132 is positioned near-by on the support surface 106.

Each head or workstation described herein is preferably operative in three modes or operational states. The first, or so-called "sleep" mode, is an inactive state. The second, or so-called "aiming" mode, emits a pointing or aiming light beam to assist the operator in correctly orienting the product label. The aiming light beam can be a circular or elliptical beam spot, or a short linear sweep on the symbol. The third, or so-called "scanning" mode, emits a light beam which scans and reads the entire symbol.

As shown in FIG. 8, the host computer 60 can serve multiple heads or workstations such as workstations 200. Each workstation is independently operable to scan a product label, print an updated label, and enable an operator to apply the printed label on a product in a so-called "scan-print-apply" operation.

It is further advantageous if the aforementioned decode/control means 56, as well as all the other components in the head or workstation, are mounted on a single circuit board such as board 54. A number of things then become possible that are advantageous both during manufacturing and in use in the field. For example, the microprocessor 30 can control functions that otherwise might not be possible, or might require expensive hardware.

During manufacture of the head or workstation, for example, the microprocessor 30 could control such things as motor scan amplitude (or scan speed) and laser power. This would permit automatic adjustment of these settings to the proper levels, when placed in a fixture that can provide feedback to the scanner so that it will know when the settings are correct. This eliminates expensive and time-consuming human labor, and increases product reliability and consistency by eliminating human error.

With the microprocessor in control, scanning performance can be improved. Such things as gain of the analog amplifiers, motor speed, and digitizing thresholds can be varied by the microprocessor to help decode difficult-to-read symbols.

Some of these things can be varied with the decode/control means remote from the scanner, but it will increase the number of interconnections between the scanner and decode/control means which increases size and cost of interconnecting cables and connectors.

Other adjustments, such as laser power or motor speed, which are automatically set during manufacturing, require that the decode/control means and scanner be on one board, as the decoder will have learned the proper settings for its particular scanner, and so must never be connected to another scanner.

The decode/control means can control such functions by using digital-to-analog converters, digitally-controlled potentiometers or attenuators, analog switches, or whatever is appropriate for the function being controlled. Proper settings that are determined during manufacturing can be stored in non-volatile memory in the microprocessor so they can be restored each time the scanner is powered up.

This invention is not intended to be limited to food counters, since any merchandise can be optically read in the manner described above. In a retail situation such as a clothing tore, the scanner 10 could additionally be provided with a tag deactivator.

## Claims

1. A method of processing products in a point-of-sale system, the system comprising one or more customer price information stations (10, 100, 200), one or more customer check-out sites, and a host computer (60) coupled to the one or more customer price information stations, the method comprising the steps of:
(a) storing information relating to the products in a database of a host computer (60);
(b) presenting a selected product to a said customer price information station, the product bearing no human-readable price information;
(c) identifying the selected product by electro-optically reading indicia associated with the selected product, the indicia having parts of different light reflectivity;
(d) interrogating the host computer (60) on a real-time basis for price information on the identified product;
(e) printing a paper containing human-readable price information relating to the product obtained from the host computer; and
(f) presenting the paper and the product at a said customer check-out to complete purchase of the product.

2. A method as claimed in claim 1 in which the identifying step is performed by directing a light beam onto the indicia, detecting at least a portion of light of variable intensity reflected off the indicia over a field of view, scanning at lest one of the light beam and the field of view, and processing electrical signals indicative of the detected light intensity into data descriptive of the indicia.

3. A method as claimed in claim 2 in which the identifying step is performed in a hand-held device (10) amiable at the indicia during reading.

4. A method as claimed in claim 2 in which the identifying step is performed in a head of a desktop, stand-along workstation (100).

5. A method as claimed in claim 2 in which the identifying step is performed in a movable head (102) positionable relative to a work surface.

6. A method as claimed in claim 5 in which the head (102) is connected to one end of a bendable arm (108); and further comprising the step of bending the arm (108) to position the head in a desired orientation.

7. A method as claimed in claim 1 in which the identifying step is performed in a head (102), and in which the interrogating step is performed by inter-connecting the head (102) and the host computer (60).

8. A method as claimed in claim 1 in which the identifying step is performed in a head (102), and in which the printing step is performed by mounting a printer on-board the head.

9. A method as claimed in claim 1 in which the printing step is performed by a portable printer.

10. A method as claimed in claim 1 in which the printing step is performed by printing sequential coded data indicative of the total number of printings.

11. A method as claimed in claim 1 in which the printing step further includes printing machine-readable characters on the paper.

12. A method as claimed in claim 1 in which the storing step is performed by periodically updating price information relating to the products.

13. A method as claimed in any of the preceding claims in which the printing step includes printing onto a label having a pressure-adhesive backing; and in which the label is then applied to the identified product prior to the product being presented at the customer check-out.

## Patentansprüche

1. Verfahren zum Verarbeiten von Produkten bei einem Verkaufs- bzw. Kassenterminalsystem, wobei das System eine oder mehrere Kundenpreisinformationsstationen (10, 100, 200), eine oder mehrere Kunden/Warenausgabestellen und einen Hostcomputer (60) aufweist, und zwar gekoppelt mit der einen oder den mehreren Kundenpreisinformationsstation(en), wobei das Verfahren die folgenden Schritte aufweist:
(a) Speichern von sich auf die Produkte beziehende Information in einer Datenbasis eines Hostcomputers (60);
(b) Vorlegen eines ausgewählten Produktes an der erwähnten Kundenpreisinformationsstation, wobei das Produkt keine durch den Menschen lesbare Preisinformation besitzt;
(c) Identifizieren des ausgewählten Produktes durch elektrooptisches Lesen von Anzeigemitteln, die mit dem ausgewählten Produkt assoziiert sind bzw. zusammenhängen, wobei die Anzeigemittel Teile unterschiedlicher Lichtreflektivität besitzen;
(d) Abfragen des Hostcomputers (60) auf einer Realzeitbasis nach Preisinformation hinsichtlich des identifizierten Produktes;
(e) Ausdrucken eines Papiers, welches von einem Menschen lesbare Preisinformation enthält, die sich auch das Produkt bezieht und vom Hostcomputer erhalten wurde; und
(f) Vorlegen des Papiers und des Produktes an dem erwähnten Kundenausgabeplatz um den Kauf des Produktes zu vollenden.

2. Verfahren nach Anspruch 1 bei dem der Identifizierungsschritt dadurch ausgeführt wird, dass man einen Lichtstrahl auf die Anzeigemittel leitet, mindestens einen Teil des Lichtes variabler Intensität reflektiert von den Anzeigemitteln über ein Gesichtsfeld hinweg detektiert, den Lichtstrahl und/oder das Gesichtsfeld tastet und die für die detektierte Lichtintensität eine Anzeige bildenden elektrischen Signale in Daten verarbeitet, welche die Anzeigemittel beschreiben.

3. Verfahren nach Anspruch 2, wobei der Identifizierungsschritt in einer in der Hand zu haltenden Vorrichtung (10) ausgeführt wird, die während des Lesens auf die Anzeigemittel zielbar ist.

4. Verfahren nach Anspruch 2, wobei der Identifizierungsschritt in einem Kopf einer auf einem Tisch stehenden unabhängigen Arbeitsstation (100) ausgeführt wird.

5. Verfahren nach Anspruch 2, bei dem der Identifizierungsschritt in einem beweglichen Kopf (102) ausgeführt wird, der relativ zu einer Arbeitsoberfläche positionierbar ist.

6. Verfahren nach Anspruch 5, wobei der Kopf (102) mit einem Ende eines biegbaren Arms (108) verbunden ist, und wobei ferner der Schritt des Biegens des Arms (108) zur Positionierung des Kopfes in einer gewünschten Orientierung vorgesehen ist.

7. Verfahren nach Anspruch 1, wobei der Identifizierungsschritt in einem Kopf (102) ausgeführt wird, und wobei der Abfrageschritt durch Miteinanderverbinden des Kopfes (102) mit dem Hostcomputer (60) ausgeführt wird.

8. Verfahren nach Anspruch 1, wobei der Identifizierungsschritt in einem Kopf (102) ausgeführt wird, und wobei der Druckschritt durch Anbringen eines Druckers auf dem Kopf ausgeführt wird.

9. Verfahren nach Anspruch 1, wobei der Druckschritt durch einen tragbaren Drucker ausgeführt wird.

10. Verfahren nach Anspruch 1, wobei der Druckschritt dadurch ausgeführt wird, dass sequentiell codierte Daten ausgedruckt werden, die eine Anzeige für die Gesamtzahl der Drucke bilden.

11. Verfahren nach Anspruch 1, wobei der Druckschritt ferner das Drucken von maschinenlesbaren Zeichen auf dem Papier umfaßt.

12. Verfahren nach Anspruch 1, wobei der Speicherschritt dadurch ausgeführt wird, dass man periodisch die auf die Produkte sich beziehende Preisinformation auf den neuesten Stand bringt.

13. Verfahren nach einem der vorhergehenden Ansprüche, wobei der Druckschritt das Drucken auf ein Etikett mit einer Druckkleberückseite erfolgt; und wobei sodann das Etikett auf das identifizierte Produkt aufgebracht wird, bevor das Produkt am Kundenausgabeplatz vorgelegt wird.

## Revendications

1. Procédé de traitement de produits dans un système de point de vente, le système comportant un ou plusieurs postes d'indication de prix pour clients (10, 100, 200), un ou plusieurs sites de caisse de sortie pour clientis, ainsi qu'un ordinateur hôte (60) couplé au poste ou aux postes d'indication de prix pour clients, le procédé comportant les étapes consistant :
(a) à stocker des informations relatives aux produits dans une base de données d'un ordinateur hôte (60) ;
(b) à présenter un produit sélectionné à un dit poste d'indication de prix pour clients, le produit ne portant aucune indication de prix lisible par lecteur humain ;
(c) à identifier le produit sélectionné en lisant de façon électro-optique des indices associés au produit sélectionné, les indices présentant des parties de réflectivité de lumière variable ;
(d) à interroger l'ordinateur hôte (60) en temps réel afin d'obtenir une indication de prix relative au produit identifié ;
(e) à imprimer un support papier contenant une indication de prix lisible par lecteur humain relative au produit obtenu de l'ordinateur hôte ; et
(f) à présenter le support papier et le produit à une dite caisse de sortie pour clients pour achever l'achat du produit.

2. Procédé selon la revendication 1, dans lequel l'étape d'identification est exécutée en dirigeant un faisceau de lumière sur les indices, en détectant au moins une portion de lumière d'intensité variable réfléchie par les indices sur un champ visuel, en effectuant un balayage au moins soit du faisceau de lumière, soit du champ, et en traitant des signaux électriques représentatifs de l'intensité de lumière détectée de façon à obtenir des données décrivant les indices.

3. Procédé salon la revendication 2, dans lequel l'étape d'identification est exécutée dans un dispositif à main (10) apte à être pointé sur les indices au cours de la lecture.

4. Procédé selon la revendication 2, dans lequel l'étape d'identification est exécutée dans la tête d'un poste de travail autonome de bureau (100).

5. Procédé selon la revendication 2, dans lequel l'étape d'identification est exécutée dans une tête mobile (102) apte à être positionnée par rapport à une surface de travail.

6. Procédé selon la revendication 5, dans lequel la tête (102) est reliée à une extrémité d'un bras pliable (108), et comportant, en outre, l'étape consistant à plier le bras (108) afin de positionner la tête suivant une orientation souhaitée.

7. Procédé selon la revendication 1, dans lequel l'étape d'identification est exécutée dans une tête (102) et dans lequel l'étape d'interrogation est exécutée en interconnectant la tête (102) et l'ordinateur hôte (60).

8. Procédé selon la revendication 1. dans lequel l'étape d'identification est exécutée dans une tête (102), et dans lequel l'étape d'impression est exécutée eh montant une imprimante sur carte sur la tête.

9. Procédé selon la revendication 1, dans lequel l'étape d'impression est exécutée par une imprimante portable.

10. Procédé selon la revendication 1, dans lequel l'étape d'impression est exécutée en imprimant des données codées séquentielles représentatives du nombre total d'opérations d'impression.

11. Procédé selon la revendication 1, dans lequel l'étape d'impression comprend, en outre, l'impression sur le papier de caractères lisibles par machine.

12. Procédé selon la revendication 1, dans lequel l'étape de stockage est exécutée en mettant à jour périodiquement des indications de prix relatives aux produits.

13. Procédé selon l'une quelconque des revendications précédentes, dans lequel l'étape d'impression comprend l'impression sur une étiquette ayant un support auto-adhésif, et dans lequel l'étiquette est alors appliquée sur le produit identifié avant que celui-ci ne soit présenté à une caisse de sortie pour clients.
